Europäisches Patentamt

European Patent Office

Office européen des brevets

(11) Publication number: **0 325 822 B1**

## EUROPEAN PATENT SPECIFICATION

(45) Date of publication of patent specification: **10.03.93**  (51) Int. Cl.⁵: **A23F  5/04**, A23N 12/10

(21) Application number: **88300603.3**

(22) Date of filing: **26.01.88**

(54) **Coffee roasting method and apparatus.**

(43) Date of publication of application:
**02.08.89 Bulletin  89/31**

(45) Publication of the grant of the patent:
**10.03.93 Bulletin  93/10**

(84) Designated Contracting States:
**DE ES FR GB**

(56) References cited:
**GB-A- 501 199**         **LU-A- 83 045**
**US-A- 1 439 317**       **US-A- 1 793 009**
**US-A- 4 501 761**       **US-A- 4 540 591**

(73) Proprietor: **KRAFT GENERAL FOODS, INC.**
**250 North Street**
**White Plains New York 10625(US)**

(72) Inventor: **Brandlein, Lawrence S.**
**14 Thomas Drive**
**Englishtown New Jersey 07726(US)**
Inventor: **Schechter, Steven M.**
**22 kensington Drive**
**Manalpan New Jersey 07726(US)**
Inventor: **Mahlman, James P.**
**18 Van Wyck Drive**
**Princeton New Jersey 08550(US)**

(74) Representative: **Eyles, Christopher Thomas et al**
**W.P. THOMPSON & CO. High Holborn House**
**52-54 High Holborn**
**London WC1V 6RY (GB)**

Rank Xerox (UK) Business Services
(3. 10/3.5x/3.0. 1)

**Description**

TECHNICAL FIELD

The present invention relates to a coffee roasting method and more particularly to a coffee roasting method that is quite rapid while providing the opportunity to control final product properties. The invention also relates to the product of such a roast and apparatus for performing the coffee roasting method.

BACKGROUND ART

Conventional non-fluidized bed coffee roasting equipment uses a roasting atmosphere at a temperature often exceeding 1000°F (537.8°C). In addition, conventional non-fluidized bed roasters typically use low weight ratios of roasting atmosphere to coffee beans (hereinafter referred to as the air to bean ratio). The combination of the high roasting temperature and the low air to bean ratio results in a temperature gradient from bean to bean as well as within the coffee bean itself. Such a temperature gradient indicates that different roasting reactions occur at different times among the beans as well as internally in any given coffee bean.

Fluidized bed roasting of coffee beans is well established in the art. For example, U.S. Pat. No. 4,169,164 to Hubbard et al describes a two-stage fluidized bed roasting process wherein the temperature in the first stage is 450° to 470°F (232.2° to 243.3°C), while in the second stage roasting is at about 450°F (about 282.2°C) with a fluidized bed depth of about 2 inches (5.08 cm). A similar process is disclosed in U.S. Pat. No. 4,322,447 to Hubbard wherein the temperature in both stages is between 550° and 570°F (between 287.8° and 298.9°C). The apparatus contemplated for use in both disclosures is a fluidized bed wherein heated gas is directed downwardly through jets onto a vibrating gas-impervious plate which gas is then deflected upward, thereby fluidizing and roasting the coffee beans. The apparatus is more fully described in U.S. Pat. No. 3,229,377 to Hoyt. Numerous modifications of the apparatus are disclosed in U.S. Pat. Nos. 3,262,217; 4,109,394; 4,169,322; 4,201,499 and 4,306,359.

Other apparatus for the fluidized bed roasting of coffee are U.S. Pat. No. 3,964,175 to Sivitz which in turn contains an extensive survey of prior art attempts at fluidized bed roasting.

PCT Published International Application No. PCT/US 83/01521 (International Publication No. WO 84/01271) in the names of Brown et al. describes a modest laboratory scale apparatus and method for roasting coffee beans in less than 3 minutes. The process teaches charging green coffee beans to be roasted in a roasting chamber, flowing fluid through an inlet tube for discharge as a high velocity column against the base of the chamber and deflection radially outward for upward flow at lower velocity. The high velocity column of fluid produces a fluidization and toroidal recirculation of the coffee beans in the roasting chamber. The combination of the thermal convection and thermal conduction between individual coffee beans in the roasting chamber provides a short time uniform roast.

U.S. Pat. No. 4,501,761 describes a continuous coffee roasting method in which green beans are charged to a rotating perforated cylinder divided by a helical screw into separate compartments and rotated at a speed to cause the beans to pass through the cylinder in from 2 to 10 minutes whilst blowing heated gas at between 200°C and 240°C upwardly through the cylinder throughout its length so as to maintain the coffee in a bubbling bed in each compartment. This bubbling bed is intermediate between a static non-fluidized bed in which essentially none of the beans are surrounded by a roasting atmosphere and a fluidized bed in which substantially all of the beans are suspended in the roasting atmosphere.

U.S. Pat. No. 4,540,591 teaches a method of steaming, roasting and blending Robusta coffee beans. This method uses a bubbling bed roaster which may comprise a rotating perforated cylinder within the roaster.

It is an object of the present invention to provide coffee roasting methods which are commercial and transcend all of the foregoing processes in permitted the roast to occur in less than 3 minutes while at the same time producing quite acceptable coffee.

It is another object to the present invention to provide a roasting method which produces a less dense coffee having perceived flavour and strengths and soluble solids yield significantly greater than those of conventionally roasted coffee of equivalent quality. Indeed the roaster yield of the coffee is increased significantly, the term yield referring to the pounds of roast material obtained per pound (kg) of green coffee.

It is a specific object of the present invention to provide a method for continuously roasting coffee in a manner wherein the residence time within the roaster is precisely controlled and is much less than 3

EP 0 325 822 B1

minutes and more commonly has a total roasting time of less than 2 and advantageously less than 1.5 minutes.

Still another specific objective is the ability to roast coffee by first elevating the charge of coffee with a preferred air temperature of at least 500°F (at least 260.0°C), depending upon the air-to-bean ratio, the bean type and the product so desired, whereafter a second roasting occurs generally at an equal or reduced temperature which may broadly be said to be 150°F (65.6°C) or less depending upon bean variety and blend as well as feed rate, residency time, air flow and the air temperature of the first zone.

Still another specific objectives of the present invention are to provide a continuous roasting apparatus to meet the objectives of the invention including means whereby the bed of coffee may be adjusted for receipt of the roasting gas.

Still another specific object of the present invention is to provide a coffee of acceptable flavor and color and having a roasted whole bean density of 0.34 grams per cc or less and typically in the range of between 0.280 and 0.335 grams per cc.

## DISCLOSURE OF THE INVENTION

According to one aspect of the present invention there is provided a method for roasting a high volume of from 5,000 to 12,000 lbs per hour (2267.96 to 5443.10 kg per hour) of green coffee in a manner wherein the residence time of the coffee within the roaster is precisely controlled and is less than three minutes comprising the steps of:

(a) positively feeding green coffee beans into the feed end of a first, longitudinally extending roasting chamber, said roasting chamber comprising a first rotating, cylindrical foraminous container which rotates within said roasting chamber and a first helical screw member attached to and rotatable within said container, said screw member having a diameter equal to that of the container and effective to convey the coffee beans through the roasting chamber at a precise rate upon rotation, the coffee beans being fed into the container at a rate such that the depth of the coffee bed entering is substantially less than 50% of the diameter of the container;

(b) partially roasting the coffee beans within the first container for from 0.25 to 1.5 minutes while said beans are being subjected to a flow of heated gas which passes upwardly through the first foraminous container at a rate of at least 10 pounds of gas per pound of beans (at least 10 kg of gas per kg of beans) such that the hot gas causes an expansion of the advancing bean bed, the hot gas temperature being less than 630°F (332.2°C) and exceeding 500°F (260.0°C), whereby the beans are partly fluidized, partially dried and partially expanded but do not pop, the coffee beans increasing in their activity as they approach the terminal phase of the partial roast to a point whereat the beans are in a bubbling bed but do not exceed 400°F (204.4°C) temperature, the bean charge at no time being 100% fluidized, the depth of the partially expanded bed being at all times less than 50% of the diameter of the container;

(c) passing the partially roasted beans from the discharge end of the first roasting chamber into the feed end of a second longitudinally extending roasting chamber, the first and second roasting chambers being related one to another in a manner which prevent substantially escape of heated gas and beans from the roasting chambers;

(d) conveying said beans through said second roasting chamber by means of a second rotating, cylindrical foraminous container and a second helical screw member like the first, the coffee beans residing in said second roasting chamber for from 0.25 to 2.0 minutes while said beans are being subjected to a flow of heated gas which passes upwardly through the second foraminous container, said gas having a temperature equal to or less than that of the gas entering the first roasting chamber, said beans being heated to a temperature exceeding 360°F (182.2°C) but less than 480°F (248.9°C) and being more vigorously bubbled in the second roasting chamber than in the first roasting chamber along the length thereof by gas at a mass flow rate of at least about 10 pounds of gas per pound of beans (at least about 10 kg of gas per kg of beans) and at least until the beans pop and have the requisite flavor and color developed therein, the bean charge at no time being 100% fluidized and the temperature of the beans entering the second roaster being no less than 15°F (8.3°C) below the temperature thereof leaving the first roaster;

(e) passing the roasted coffee beans from the discharge end of the second roasting chamber into a quenching zone; and

(f) quenching the roasted coffee in said zone with water and/or air to produce a roasted coffee with a whole bean density of from 0.28 to 0.34 g/cc.

3

The invention further provides an apparatus for continuously roasting coffee in a manner wherein the residence time is precisely controlled and is brief comprising:

(a) means positively feeding green coffee beans into the feed end of a first, horizontal, longitudinally extended roasting chamber, said roasting chamber comprising a first rotatable, cylindrical foraminous container and a first helical screw member attached to and rotatable within said container, said screw member having a diameter equal to the container and effective to convey coffee through the chamber at a precise rate;

(b) means for roasting the coffee within the first container including gas heating means adapted to pass heating gas upwardly through the first foraminous container at a rate of at least 10 pounds of gas per pound of coffee beans (at least 10 kg of gas per kg of coffee beans) such that the hot gas causes an expansion of the advancing bean bed, the gas heating means being operative to heat the coffee at 500°-630°F (260.0° to 332.2°C) to partially fluidize, partially dry and partially expand the coffee beans without popping them and produce a bubbling bed therein not exceeding 400°F (204.4°C) bean temperature;

(c) means for passing the partially roasted beans from the discharge end of the first roasting chamber to the feed end of a second roasting chamber, said passing means preventing substantial loss of heated gas and beans from the second roasting chamber;

(d) a second roasting chamber like the first roasting chamber comprising a second rotating cylindrical foraminous container and a second helical screw member like the first, said second roasting chamber including second gas heating means adapted to pass heating gas upwardly through the second foraminous container at a rate of at least 10 pounds of gas per pound of coffee beans (at least 10 kg of gas per kg of coffee beans) such that the hot gas causes a continued expansion of the advancing bean bed and such that the coffee beans have the requisite flavor and color developed therein;

(e) means for passing the roasted coffee from the discharge end of the second roaster to a coffee quencher; and

(f) means for quenching the roasted coffee by water and/or air.

A method for continuously roasting coffee in a manner wherein the roaster heating of the coffee is precisely controlled by the mechanical design of a solid screw which insures the positive flow and is broadly less than 3 minutes has now been invented. In the first step, green coffee means are fed into the feed end of a first, longitudinally extending roasting chamber which includes a first cylindrical foraminous container which rotates within a roasting chamber and a first helical screw member attached to and rotatable with the container. The screw member has a diameter equal to that of the container and is effective to convey the coffee beans through the roasting chamber at a precise rate, the coffee beans being fed into the container at a rate such that the "static" (packed) bed entering it is substantially less than 25% of the diameter of the container.

The beans are partially roasted within the container for from 0.25 to 1.5 minutes during which they are subjected to a flow of heated gas which passes upwardly through the first foraminous container at a mass flow rate of at least 10 pounds of gas per pound of beans (at least 10 kg of gas per kg of beans) and such that the hot gas eventually causes an expansion of the advancing bean bed and partial flavor development. The depth of the expanded bed is at all times less than 50% of the diameter of the foraminous container. The hot gas temperature ranges upwardly from 500°F (260.0°C) but is generally less than 630°F (332.2°C). As a result, the beans are partially fluidized, partially dried and partially expanded but do not pop. The coffee beans increase in their activity as they approach the terminal phase of the first partial roast to a point whereat the beans are in a bubbling bed but do not exceed 400°F(204.4°C) bean temperature; in terms of a temperature range, partially roasting coffees in the 300°-375°F (148.9°-190.6°C) range are common; the more preferred range being above 330°F (above 165.6°C)for one minute or less

The beans are then passed from the discharge end of the first roasting chamber into the feed end of a second longitudinally extended roasting chamber like the first. The first and second roasting chambers are sealed together in a manner which prevents substantial escape of heated gas and beans therefrom. The beans are conveyed through the second roasting chamber by means of a second rotating cylindrical foraminous container and a second helical screw member like the first. The coffee beans reside in the second roasting chamber for from 0.25 to 2 minutes, commonly less than 1.5 minutes, while the beans are being subjected to a flow of heated gas which passes upwardly through the second foraminous container at a temperature equal to or less than that of the gas entering the first rotating chamber. The beans are vigorously bubbled in the second roasting chamber along the length thereof by gas at a mass flow rate of at least 10 pounds of gas per pound of beans and commonly at least until the beans "pop" and have the requisite flavor and color developed therein.

Thereafter, the beans are passed from the discharge end of the second roasting chamber into a zone where they are quenched with water and/or air, commonly both.

It is a distinctive feature of the present invention that the total roasting time in the first and second zone combined may advantageously be less than 3 minutes and indeed in the desired processing from the standpoint of density reduction and flavor strength the total roasting time should be less than 2.0 minutes, commonly less than 1.5 minutes total, a dramatic reduction in the elapsed time of heating coffee to produce coffee flavor.

It is a distinct feature in this invention and one to be contrasted from prior art that the temperature of the gas entering the second roasting chamber will be equal or less than that entering the first roasting chamber, the temperature differential between roasting zones being dependent upon the bean variety. Thus, where the coffee being roasted is principally either Robusta or Santos, the temperature in the second roasting chamber will typically be 25° to 125°F less (13.9° to 69.4°C less) than that in the first roasting chamber. In the case of Milds or a blend principally containing Milds, the second gas temperature in the second roasting chamber will be 0° to 75°F less (0° to 41.7°C less) than that in the first chamber. Although the present invention has its widest application in the roasting of individual coffees strains which are thereafter blended, and thus may be characterized as single bean variety roasts, the invention is applicable also to the roasting of blend varieties, that is, blends wherein the coffee strains have been mixed prior to roasting rather than after.

The coffee in the first and second chambers is subjected to a total mass flow rate of 20 to 60 pounds of gas (preferably heated air) per pound of green bean (20 to 60 kg of gas (preferably heated air) per kg of green bean), the flow rate for each zone being dependent upon the overall length of the first and second roasting cycle.

The first and second chambers will have a foraminous roasting cylinder in each zone adapted to receive upwardly-directed heating air creating a novel bubbling action throughout wherein the coffee is only partly fluidized and partly non-fluidized as it advances.

The flow rate will be such that it will be advantageous that the discharged roasted coffee will next have a water quench and thereafter it will be promptly fed to an air quench; although this is not critical, it is desired that the water quench be promptly employed for the limited period so that controlled predictable conditions may arise.

The coffee exiting the second heating zone will have a whole bean density whether or not quenched which is very significantly reduced and typically that density range will be between 0.280 and 0.340 grams per cc.

In practicing the present invention, the bean charge in the first heating zone of the roaster never exceeds the point whereat expansion to the extent of a "pop" is experienced, but it generally does reach a bean temperature exceeding 330°F (165.6°C) but not exceeding 375°F (190.6°C) as indicated. The bean charge entering directly into the second roasting zone will be at a bean temperature typically no less than 15°F below the temperature leaving the first roaster. The bean charge will be heated, in the second roaster to a temperature that exceeds 360°F (182.2°C) in any event but is less than 480°F (248.9°C), a common range being 365°-450°F (185.0°-232.2°C). As a result, controlled pyrolysis occurs in the second roasting chamber generating coffee flavor, color as well as bean expansion.

The roasted coffee particulate matter including roasted chaff will be collected at the discharge end of the second roasting chamber and will be recombined with the roasted coffee as will be discussed hereinafter.

The total roasting time from the point of entry to the first roaster to the point of discharge from the second roaster will advantageously be less than 2 minutes and provides a distinct product in terms of lower density and higher flavor strength.

## BEST MODE FOR CARRYING OUT THE INVENTION

As the description herein will develop, it becomes apparent that in practicing the present invention it is possible to roast coffee in a period of 2 minutes or less and to achieve such a roast at a high volume, typically 5,000 to 12,000 lbs. per hour (2267.96 to 5443.10 kg per hour) of green coffee, it being recognized that lower volumes are practical as well.

While not being restricted to any theory, it is believed a relatively short span of time is devoted to heat treatment and reaction of moisture, and yet that moisture promotes additional hydrolysis and participates advantageously in the roasting process. This is achieved by having the bean temperature rise rapidly and thus retain a high internal bean moisture during roasting. As a result, the roasted coffee bean is more pliable during roasting thereby allowing for greater expansion of the coffee. It is desired to achieve these

5

conditions under controllable circumstances whereby, on the one hand the coffee will not undergo a charring, and on the other hand will not undergo incomplete and non-uniform roasting.

It will commonly occur that the beans will be heated rapidly and uniformly to a bean temperature of approximately 420°F (215.6°C), the so called "glass-transition temperature" of a coffee bean. Glass transition temperature as defined in polymer chemistry is that temperature at which a polymer loses it crystal structure, softens and becomes like glass. The coffee bean is known to be comprised of a large portion of crystalline carbohydrates such as mannan and cellulose. When this temperature is reached, the carbohydrates contained in the bean have been softened and lose their crystal structure. Internal pressure produced by gas is generated during roasting and causes the softened mannan and cellulose within the bean to expand, opening-up the bean to roasting and providing the density decrease that is one of the primary objects of the present invention. The polymers (in this case mannan and cellulose) soften and the internal bean pressure causes markedly different rates of expansion, approaching vertical in the terminal stages of roast in a plot of time versus temperature on an expansion curve; such expansion typically occurs between about 410° and 420°F (about 210.0° and 215.6°C) bean temperature as measured by thermal mechanical analysis; ref. Perkin Elmer Thermomechanical Analysis, 1977. In a good many roasts this latter temperature will be exceeded for a short period, but generally less than 30 seconds.

Thus, puffing of the once green bean and hydrolysis of solids therein occurs in the first zone in the presence of a large mass of heated air, followed by further expansion of the roasted bean in the second zone which may be at and may eventually exceed the glass transition temperature, the latter expansion being typically for a short period of much less than a minute. In the present process there is contemplated an endless screw rotating horizontally within and as part of a cylinder. These conditions pertain generally when the gas temperatures in the first zone as contemplated in said apparatus are preferably 500° to 630°F (260.0° to 332.2°C), more particularly 560° - 610°F (293.3° - 321.1°C) followed by an equal or lower temperature in the second zone, more commonly at a lower air temperature ranging anywhere from 460° to 570°F (237.8° to 298.9°C). Bean type, bean quality and moisture will vary and accordingly there will be a variance in the second zone temperature; however, it is generally the case that these temperatures will exceed 460°F (237.8°C) and range upwardly to 570°F (298.9°C).

The atmosphere in which this roasting is effective can be described as a bubbling bed, that is, one which is intermediate a static non-fluidized bed wherein essentially none of the beans are suspended in the roasting atmosphere and a fluidized bed wherein substantially all of the beans are suspended in the roasting atmosphere. A bubbling bed as used herein is one in which the greater mass of coffee beans is eventually suspended, that is, 50% or more by weight by visual approximation. Typically, in the initial stage or first zone the bubbling bed constitutes a minimum of say 20% beans fluidized; as the beans are advanced in this chamber the extent of bean fluidization will increase to a point whereat the coffee will be approximately 40% or more, say 50% fluidized. Thereafter, the coffee will undergo further fluidization in the second zone to the extend that, by the end of roasting, the coffee will have experienced at least 50% fluidization and commonly in the neighborhood of 70%-80%. The degree of fluidization is to some degree dependent upon the bean type as well as the degree of roasting required for the final product. In addition, the volume and the velocity of the air as well as the feed rate of coffee to the apparatus will all determine the extent to which the bubbling will be manifested. Nevertheless, it is foreseen at the present time that at less than 20:1 gas to bean ratio for the entire roasting operation there will be insufficient mixing, thereby generating non-unform roasting, higher density, longer roast time and generally an unacceptable roasting condition.

The bubbling bed may be characterized as a recycling one wherein a good portion of the beans are in contact with the heating air stream therebeneath. As a result, the effecting air-to-bean ratio for the beans that are in the fluidized state per se, will exceed the total gas-to-bean ratio aforesaid by as much as 2-4 to 1. The rate of this recycling increases as the coffee charge moves through the roasting zones. The recycling pattern causes the beans to receive heat energy through alternating mechanisms of convection and conduction thereby allowing an effective transfer of heat energy. This affords two means of heat transfer to occur continuously throughout the roasting process, convection heating becoming progressively more dominant as the means of heat transfer. Conductive heating occurs throughout at the lateral extremities of the coffee bed, however, and provides predictable and controllable energy transport. A uniform roasting is thus realized throughout where the external history of the roasts of each bean is substantially the same, including the popping region and the region thereafter where flavor is fully developed. The amplitude of the height of bean fluidization increases along the length of the bed and will be at least two to threefold the height of the static bed as the coffee is roasted and tumbled, but the bed is never more than 50% of the diameter of the roasting cylinder.

It should be noted therefore that the bean charge at no time is 100% fluidized and a quantity of beans, at all times along the length of the roaster, will be non-fluidized and in contact with other beans as well as with the heated cylinder.

Generally speaking and in greater detail the charge of coffee in a quiescent state, i.e., without the introduction of an air mass thereto, will be less than 5 inches (12.7 cm) no matter what the practical outer diameter of the foraminous cylindrical container - helical screw might be. To illustrate, however, for a 43 inch (109.22 cm) diameter foraminous container the initial bed depth may range between ½ and 2½ inches (1.27 and 6.35 cm), typically 2 inches (5.08 cm) in a quiescent condition. The length of the helical screws can vary and range anywhere from 6 ft. to 50 ft. (182.88 cm to 1524 cm); a common length will typically be in the neighborhood of 25 to 35 ft. (762 to 1066.8 cm), say 30 ft. (914.4 cm) for a screw having a 2 inch (5.08 cm) coffee bed depth (quiescent).

As indicated, it will be preferred to have an interrupted section intermediate the first and second zone wherein the coffee will reside for a period of no more than 25 seconds and more typically 6 to as high as 18 seconds. In passage through this zone the coffee is maintained essentially at a temperature substantially equal to that in the first zone. Although it is recognized that there will be some very marginal loss of temperature in this zone, no more than 15°F (8.3°C) bean temperature loss will exist between the exit from the first and, that prior to entry to the second roasting zones.

The foregoing conditions will be understood to apply in the case of screws which are of the same pitch. Hence, the coffee would, normally speaking, be moved at a uniform rate through both roasting zones. On the other hand, it is quite conceivable and still within the invention that a roaster operating under the same heating conditions broadly can have a nonuniform pitch such as one wherein the charge of coffee is initially charged to a shorter screw pitch which thereafter lengthens; the same considerations apply to the second screw, the diameter of which may be greater than that of the first.

The roasted and ground final coffee weight may be typically as high as 14 oz. (396.9 g) but more commonly will be 11 to 13.5 oz.(311.8 to 382.7 g) for a 1 lb.(453.6g) can of conventional diameter and size; for sake of reference an 11oz. roasted and ground product of this invention occupies a volume of 1,090 cubic centimeters, a cannister of approximately 9 inches (22.86 cm) diameter and 5 3/8 inch (13.65 cm) height and designed to receive a conventional 16 oz. (453.6 g) roasted and ground coffee; this reference is used throughout. This corresponds to a roasted whole bean density within the range of 0.280 to 0.340 grams per cubic centimeter. Broadly speaking, for 11 to 13½ oz. (311.8 to 382.7 g) coffee, it will be found that the flavor strength and character will be comparable to that of a conventional atmospheric roast. Thus, when the 11 to 13.5 oz. (311.8 to 382.7g) coffee product of this invention is brewed, it will use the same volume of coffee but at a reduced weight as the recipe for a current 16 oz. (453.6g) product while offering comparable flavour, strength and quality.

It has been observed that the total volume of heated air during roasting will range anywhere from at least 20:1 and more commonly will be about 35:1, but may be as high by volume of coffee as 60:1 along the total roaster length. It will be understood that this air to bean ratio will constitute a significant departure from prior art which has characterized coffee roasters and which generally range from 3:1 to 15:1 air-to-coffee volume for a Probat-batch or a Wolverine Jetzone type roaster, respectively.

As noted, for the conditions of common usage, the gas temperatures will be below 630°F (332.2°C) in the first zone. It is possible to practice this invention at higher inlet air temperatures with still shorter times in the first zone than those expressed herein while enjoying the same benefits. Such criteria as are specified for the initial roasting operation, are for the purpose of orientation relative to prior art rather than specifying an upper roast temperature in the inlet air to the first zone.

It should be noted at this point that the second zone is employed to influence color as well as flavor and density control. The flavor profile will generally be such that the coffee will be roasted to that desired for a specific blend or variety; this generally involves a lighter roast color Robusta than say the Colombian Milds or the Brazilian Santos.

Generally, the 11 to 13.5 oz. (311.8 to 382.7g) final product density reduction and greater flavor strength is achieved without significant blend or color alteration from current 16 oz.(453.6g) product. Expressed in terms of what the typical preferred American preparation would be, which results in a solids level of 0.7% ± .15% in the cup, and considering also the weight of coffee used in roasted and ground preparation to produce a soluble yield of approximately 25%± 4%, the amount of coffee used in the preparation is reduced significantly. 11 oz. (311.8g) of the present roasted coffee now offers the same perceived brew flavour as 16 oz. (453.6g) of conventional roasted coffee at 90 to 110 cups per can in accordance with current consumer usage level; these propositions apply generally in the case of 11 to 13.5 oz. (311.8 to 382.7g) coffee.

The density measurement procedure is comparable to that of the prior art and reference may be had in this connection to U.S. Patent 4,332,447 to Hubbard issued March 30, 1982, column 4, lines 46-55 wherein a technique is set forth for measurement. The roasted coffee product produced will of course vary with bean variety, green character, bean moisture content as well as the distribution of bean sizes in a given variety blend and the age thereof.

Certain unique properties are believed to apply in the case of the present roasted coffees that do not apply in the case of commercially available coffee-so far as presently known. To explain, thermal degredation of the coffee cell wall as a result of roasting is distinctly different, evidencing a lesser degree of thermal degradation for the present process. A second difference is the existence of extensive hydrolysis of the coffee in the cell wall, i.e., the presence of vacuoles in the cell wall structure. To explain further, in a study of photomicrographs at say 630 diameters, prior art roasted coffee will generally comprise thermally degraded cell wall structures. But, in the case of a roast in accordance with this invention, although the cell wall surrounding individual cells will be somewhat thermally damaged and disrupted, the cell walls appear to have stretched while being substantially intact, notwithstanding that they underwent partial hydrolysis. This in part accounts for the increase in soluble solids discussed previously.

Green coffee subjected to a roast in the first stage is commonly at a moisture content of 10% ± 2% moisture, although the upper moisture level can be as high as 15%. It is anticipated that during the first stage substantial moisture will be lost through evaporation, usually a majority by weight or more, the coffee exiting the first roasting chamber at a level of 0.5-4% moisture, more commonly, 1-2%.

The moisture content of coffee exiting the second roaster zone will be in the neighborhood of 0.5-2%. Coffee entering the water quench will undergo some increase in moisture content thereby; but, the primary function of the water quench will be to effect an arresting of the flavor development process achieved in the second zone. Thereafter, coffee may be further cooled by an air quench at say room temperature to 100°F. (37.8°C), the moisture content thereof being uniform throughout.

As explained, the bean varieties for treatment in accordance with this invention can be blended after a roast (BAR) or blended before roast (BBR). For present Domestic/American purposes it will be advantageous to employ a BAR roast, where an individual coffee, such as Robusta varieties, is roasted to its optimal color and flavor. On the other hand, for certain non-American roasters such as Germany, it may be desired to employ BBR procedure in which case appropriate adjustments in the conditions to achieve maximal color and flavor development will practiced, all within the skill of the calling. Robustas have come to be used to a large extent and in the main may be said to comprise a major weight percent of the preferred blend, levels of Milds coffee and/or Santos being employed to like advantage to a lesser extend and as part of a separate roast.

Robustas will be roasted in accordance with the present invention to a range in the order of 70 - 90 photo-volt units, whereas the Colombian Milds will be roasted in the range of 30 - 60 photo volts units and the Brazilian Santos in the range of 50 - 70 photo volts. The term photo-volts and its measurement can be derived by reference to U.S. Patent No. 3,762,930 to Mahlmann issued October 2, 1973 for Mechanical Pressure Roasting of Coffee at col. 8, commencing on line 10 et seq. It should be understood that the color range specified is for caffeinated coffees, the decaffeinated being generally lower in the range of 30-60 for all varieties.

It will be desirable that the recirculating heating medium will be controlled so that chaff generated will be effectively advanced along the length of the roaster and be buffeted upwardly upon leaving the roaster prior to entry of the coffee charge into a cooling area. This will commonly involve the use of one or more fans per section which blow and recirculate air independently of one another while at the same time providing air which not only levitates the bed but agitates it. The exhaust duct work will be located in the terminal stages of the second roasting area as indicated elsewhere.

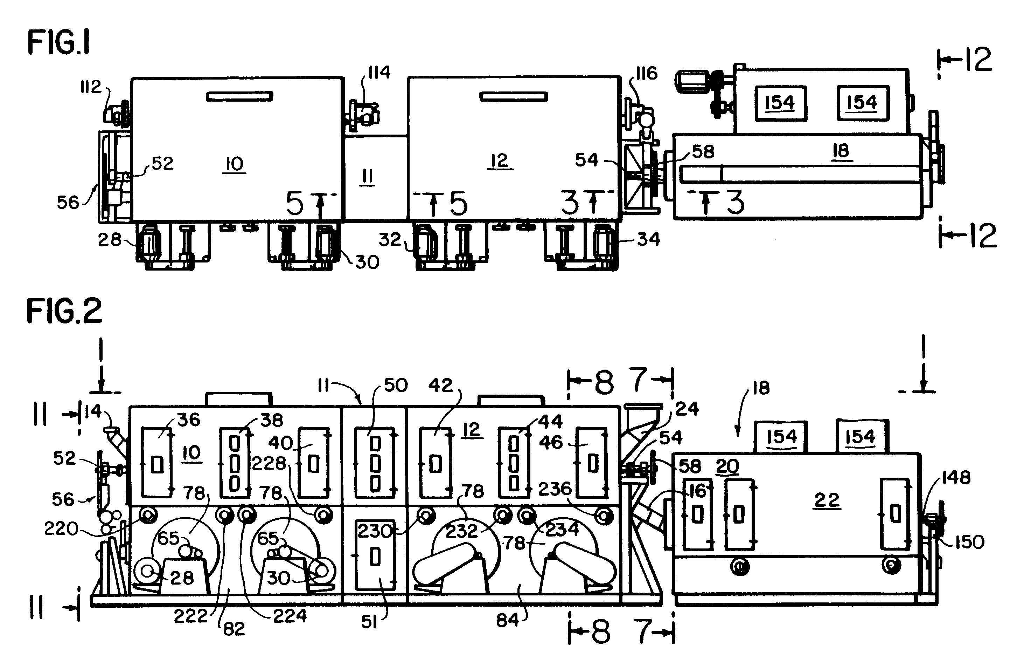

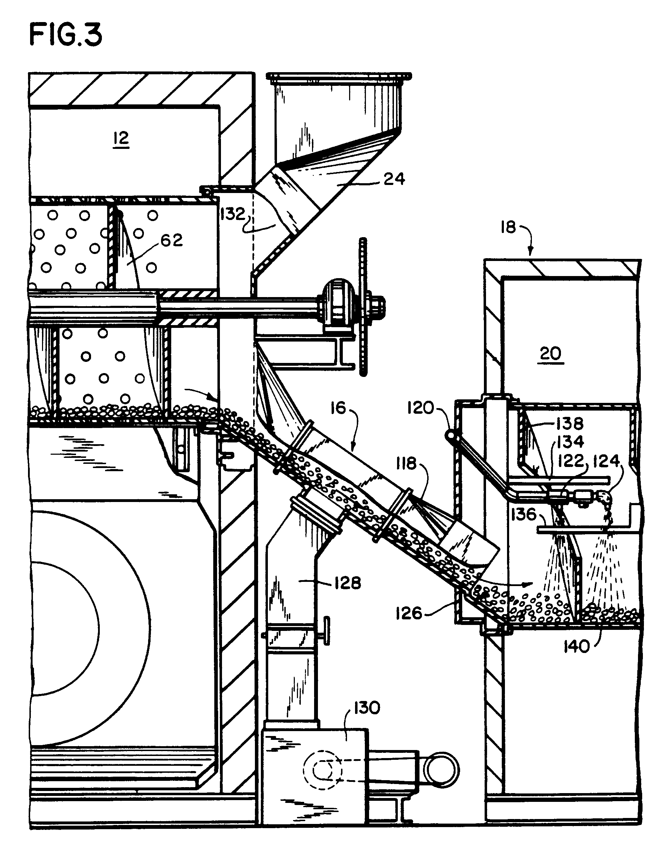

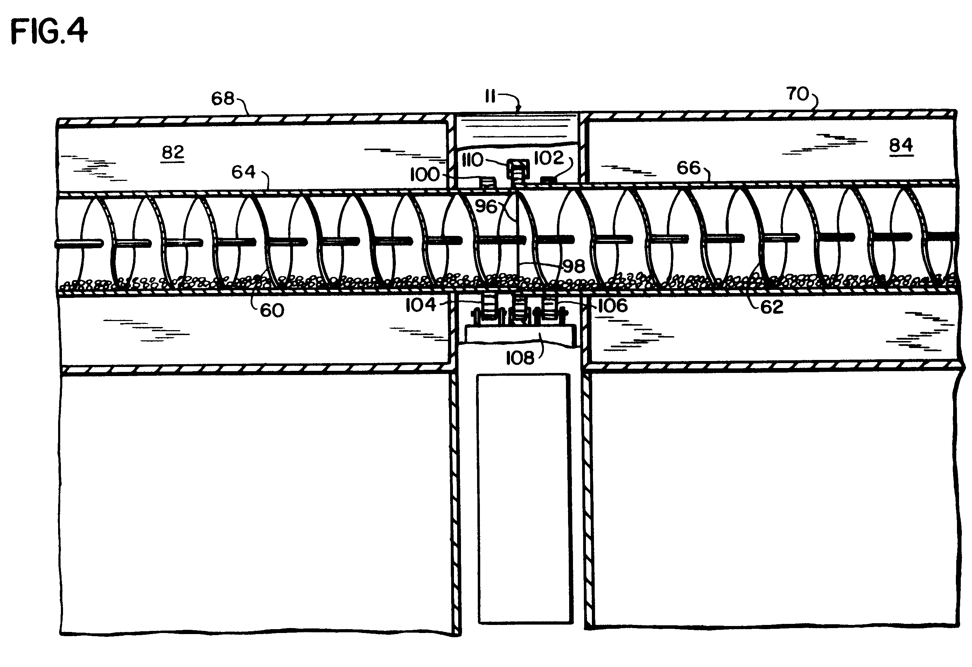

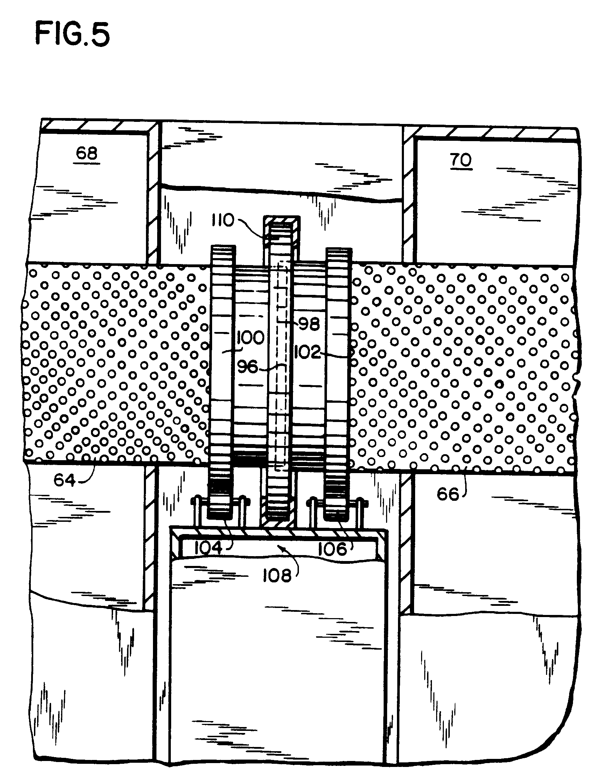

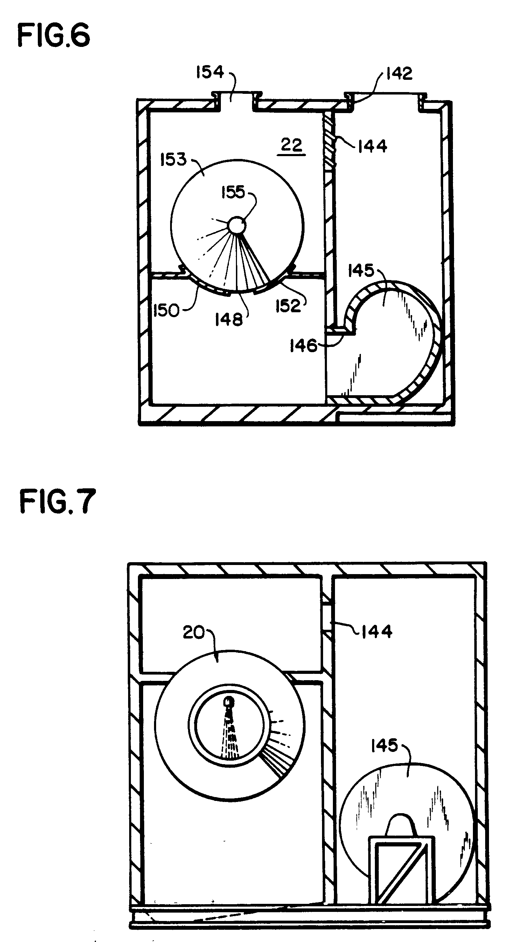

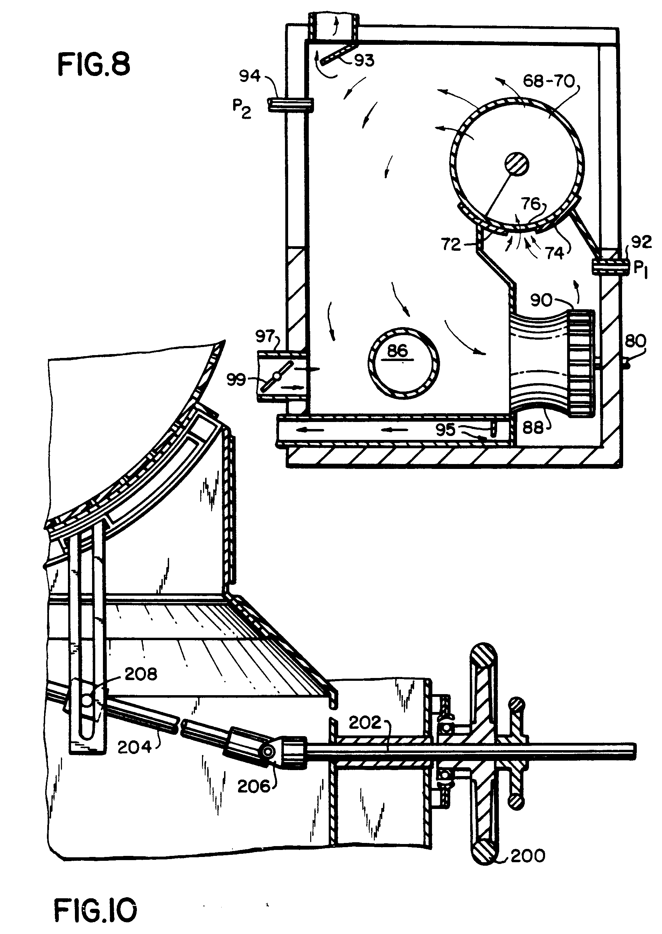

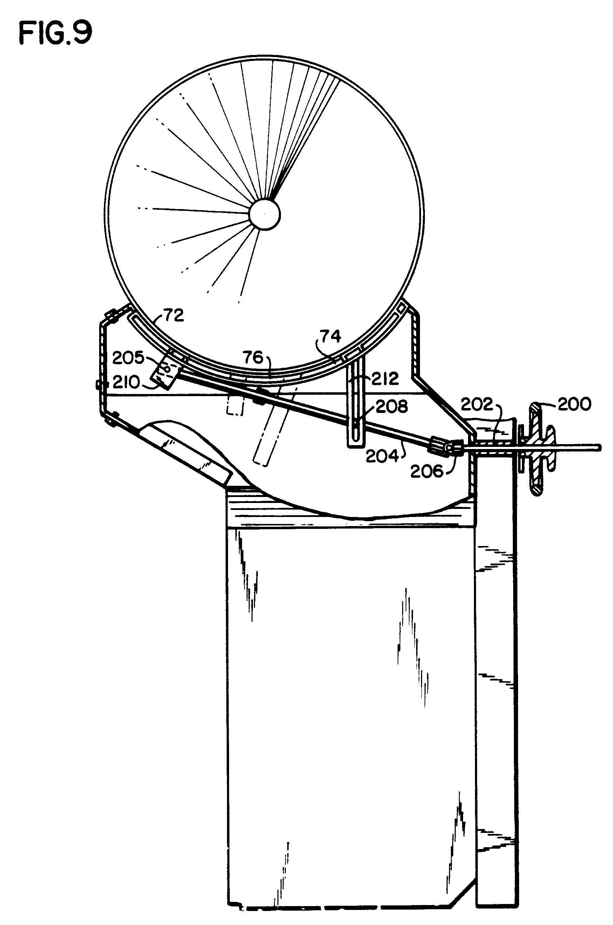

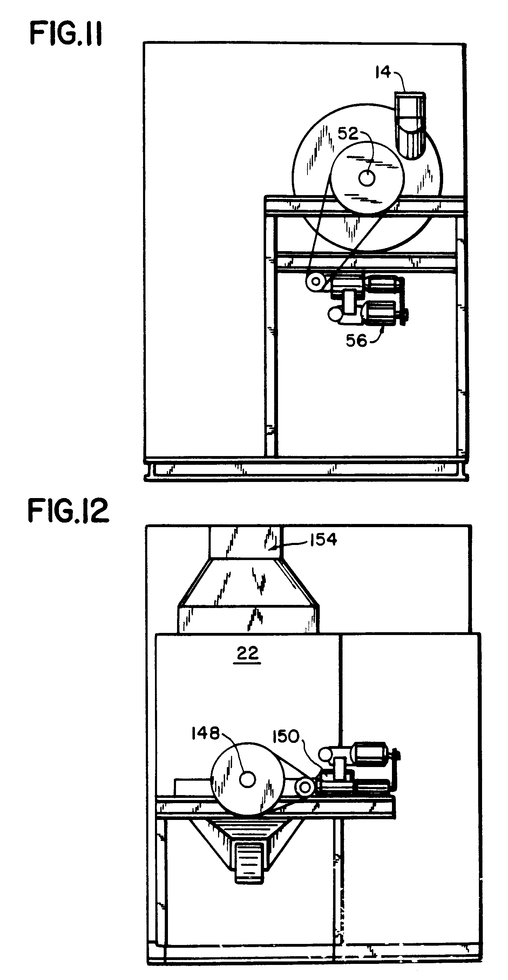

The invention may now be more understood by reference to the accompanying drawings of one device which embodies the features thereof wherein Figure 1 is a top plan view of the roaster and cooler and Figure 2 is a side elevation view of the roaster and cooler. Figure 3 is an expanded side elevation of portions of the roaster and cooler along line 3-3 in Figure 1. Figures 4 and 5 are expanded views of an intermediate section of the roaster. Figure 6 is an expanded view of the intermediate zone of the cooling unit of the roaster. Figure 7 is an expanded end view along line 7-7 of the cooler section of the roaster in Fig. 2. Figure 8 is an expanded view of the heater along line 8-8 in Fig. 2. Figure 9 is an expanded view of a portion of the roaster for adjusting the opening thereto and Figure 10 is a further expanded view of a portion of the roaster in Figure 9. And Figures 11 and 12 are end views of the device taken along lines 11-11 and 12-12 in Figures 1 and 2.

Referring to the drawings, the roaster will be seen to comprise a first roasting zone 10 communicating with a second roasting zone 12 through the intermediation of transition zone 11. Coffee enters zone 10 through a feed hopper 14. After coffee has been roasted in zone 10 and 12, it leaves through discharge generally shown as 16 and enters the cooling zone 18 which comprises a water quench section generally shown as 20 and an air cooler section 22. Roasted coffee particulate including chaff is collected at the terminal end of zone 12 through a duct 24 after having been liberated progressively from the coffee along the lengths of zones 10 and 12.

The roasters viz. zones 10 and 12, have two fan drives for each zone; thus, fan drives 28 and 30 are horizontally mounted and constitues the air flowing means for circulating air in the first zone 10, and fan drives 32 and 34 constitute counterparts in the second roasting zone 12.

A plurality of doors 36, 38, 40, 42, 44 and 46, provide access to the roaster oven zones 10 and 12. At the transition zone 11 between the first and second zone 10 and 12, doors 50 and 51 are also located for access.

Shafts 52 and 54 operating under the control of drive means generally shown at 56 and 58 mounted at the extremities of the first and second zone operate to drive the shafts respectively mounted for rotation within the first and second zones 10 and 12. Shafts 52 and 54 have mounted fixedly thereon respective helical screw 60 and 62 (ref. Fig. 4) for rotation with circumjacent foraminous perforated screens 64 and 66 within roasting cylinders 68 and 70. The screen perforations are approximately 1/5 the size of a green bean. Solid arcuate plates 72 and 74 (ref. Fig. 8) mounted beneath each roasting cylinder serve to control the admission of heating air directionally upwardly from below the coffee bed, as at 76, intermediate the edges of plates 72 and 74. The space between plates 72 and 74 will be adjusted by means to be hereinafter described so that the width of the area for heat admission 76 will vary in accordance with the quantity of coffee and the amount of heated air supplied.

A series of four internal fans, each generally shown as 78 (ref. Figs. 2 & 8) and each communicating through a shaft 65 with fan drives 28, 30, 32 and 34, respectively, are mounted within pressure boxes 82 and 84. A series of flame ports, each generally shown as 86, provides a heat source for the recirculating air which is fed through inlet ducts 88 and thence through respective fans 90 and upwardly in the direction of the roasting cylinder in zones 10 and 12, whereupon the heated air passing plates 72 and 74 at 76 surrenders heat energy to the coffee and thence passes the cylindrical foraminous screens 64, 66 of roasting cylinders 68 and 70, the fluidizing has being redirected for reheating to the respective flame ports 86. The flame port 86 thus feeds heated air through respective inlet ducts 88 and fans 90 upwardly in the direction of the roasting cylinder, whereupon the heated air passes plates 72 and 74, surrender heat energy, and passes cylindrical foraminous screens 64 and 66 of cylinders 68 and 70, the fluidizing gas being redirected to the flame port 86 to complete circulation. Heated air passes pressure taps 92 (designated as $P_1$), one for each fan, enters the coffee roasting section through plates 72 and 74 and a corresponding number of pressure taps 94 (designated as $P_2$). By utilizing the pressures $P_1$ and $P_2$ to obtain a delta P one is able to determine the volume of air being recirculated.

A portion, say 5% by volume, of the recirculated air is exhausted through ports 93 and 95 which are located in each of the two roasting zones and are installed along the entire length of each zone. The purpose of the upper port 93 is to remove air which contains volatiles released during the roasting process. The exhausted air also contains unburnt combustibles and byproducts of combustion released by the flame ports 86. The purpose of the lower port 95, known as the sweep exhaust, is to remove coffee particulate matter released through the holes in the foraminous cylinders. Exhausting air containing volatiles/unburnt combustibles along with particulate coffee matter prevents the accumulation of these flammable materials within the roasting chambers and provides a safe roasting atmosphere. The exhausted air and coffee particulates after leaving the roasting chamber are passed through recovery equipment (not shown). Presently, the recovered partially roasted coffee particulate is used as a source of fuel in boiler operations. The recovered coffee particulate could also be thought to represent a source of partially roasted coffee solids for other processing applications.

Shown in Fig. 8 is an air intake damper 97. There are two of these intake dampers in each of the two roasting zones. The damper consists of a metal shell and adjusting vane 99 whose purpose is to regulate the amount of air which passes through the damper. The intake damper provides a path for ambient air to enter the roasting chambers. This ambient air is allowed to enter the roasting chamber so as to replace air exhausted through ports 93, 95 and thus preserve the air balance with the chamber.

Referring to Figs. 4 and 5, the intermediate transition zone 11 is employed to prevent coffee material from exiting the roasters' foraminous cylindrical screens 64 and 66 at the point of their joinder 96 - 98. Zone 11 comprises a pair of trunnions 100, 102 located on the ends of the cylindrical screens 64 and 66. The trunnions 100, 102 bear respectively on support bearings 104, 106 mounted on framework 108 for supporting the free ends of the foraminous cylinders 68 and 70. An air seal 110 surrounds the ends of cylinders 68 and 70 and communicates with a fan located external to the roaster housing, whereby pressurized air passes into the air seal 110 to create a pneumatic seal at the junctures 96 and 98 of the cylinders. In this manner, a very small gap is maintained in order that the roasting cylinders 68 and 70 may be independently rotatable while being sealed to prevent coffee material from escaping the cylinders through the gap therebetween.

It will be noted that there are two burner sections for zone 1, generally 112 and 114 (Fig. 1) operating independently, the heating sections being operated to maintain a substantially constant gas temperature for the passage of coffee across zone 1. Essentially the same heating principle is employed for zone 2 except that it has but one heat source 116 serving to pass heated air through energizing zone 2 throughout. In this way a generally lower temperature air (heating gas) is blown by drives 32 and 34 for zone 2 than the air (heating gas) blown by drives 28 and 30 for zone 1.

Referring to Fig. 3, discharge chute 16 includes a port 118 which feeds water quench section 20. Pipe 120 sprays water through jets 122, 124 onto the bed of coffee deposited in the zone defined by the endwall 126 of quench chamber 20 and a transverse partition in the quench section 20.

The chaff separating arrangement 24 generally comprises a vertical duct 128 which passes air under the control of fan means 130 upwardly through the descending roasted coffee beans in 16 until it merges with roasted chaff and exits with the chaff through a duct 132 to chaff recovery equipment (not shown). Thus, roasted chaff within cylinders 68 and 70 is removed under the influence of an air flow within the cylinders and courses through zones 1 and 2 respectively for removal through the duct 132.

Bars shown at 134, 136 mounted on the walls of the water quench section act to assure uniform distribution of the water spray emanating from jet nozzles 122 and 124, the bars serving to uniformly mix the coffee and the quench water. As the coffee is advanced in the water-quench zone by helical vanes 138, it eventually reaches the air cooler section 22. Quench section 20 includes a solid rotatable cylindrical wall 140 and vanes 138 fixedly mounted therewithin to cool coffee.

The air quench, of. Figs. 6 and 7, comprises an inlet for fresh make-up air 142 which joins a portion of the exhaust air, say 50%, as it recirculates through damper section 144 in the air cooler 22. The air enters a fan area 145 and is circulated through aperture 146 and thence through adjustable apertures 148 intermediate baffles 150, 152. The openings in apertures 148 are adjustable in the same manner as plates 72 and 74 in the heating zone. The cooling air is recirculated upwardly through foraminous cylinder 153 and the roasted whole bean bed contained therein exiting the cylinder wall 153 and exhausting in part through exhaust ports 154.

It will be noted that shaft 155 operates under control of the drive mechanism therefor and operates the assembly of means for advancing and discharging the coffee beans in the water quench section 20 and the air quench section 22.

It should also be noted that although mechanisms for driving shafts 52, 54 and shaft 155 operate independently, their speeds are related to one another to assure constant flow of beans through roaster zones 1 and 2 and the cooler sections 20 and 22.

Means whereby adjustments are made in the width between plate means 72 and 74 through which heated air passes at 76 upwardly will be seen in Figs. 9 and 10 as comprising manually operated wheels 200. As wheel means 200 is rotated, it in turn rotates shaft 202 which communicates with shaft 204 through intermediation of universal joint 206, whereby pin 208 rotatably mounted on shaft 204 and pin 205 on block means 210 may each move.

Pin 208 is adapted to move opposite pin 205 as each respective wheel 200 is rotated so that operation of wheels 200 causes pins 205 and 208 to move inwardly or outwardly. Each pin 208 and 205 slides in a slotted arm 212 and block means 210, respectively, whereby the plate gap 76 therebetween is adjusted in each roaster zone. A set of wheels 200 comprising 220 and 222 forms an adjustment unit for one gap 76. Adjusting one of two like means for each roasting cylinder 68 and 70 adjusts the gap settings for heated air spanning locations 220, 222; 224, 228; 230, 232; and 234 and 236. It will be appreciated that the gaps 76 between the plates 72 and 74 in each roaster will preferably be uniform, it having been found in common practice that the gap setting for the first and second heating zones may be substantially equal in providing access of the heated air to the coffee charge. Thus, movement of the wheels 220 and 222; 224 and 228; 230 and 232; and 234 and 236 as aforesaid provides the means for adjusting the openings through which air is admitted for heating purposes in the first and second roasters. Generally, the gap setting 76 will be at about 6 o'clock or at the lower-center of the arc between the plates 72 and 74. As stated the air flow in the gap 76 between plates 72 and 74 may vary. For a typical rotating structure such as is described and having a 43" (109.22 cm) diameter screw, the gaps in each zone will be at least 2" (5.08 cm), though it can be extended to as much as 20" (50.8 cm).

**EXAMPLE 1**

As may be drawn from the conditions set forth in Table 1 hereinbelow, Colombian, Brazilian, Ivory Coast Robustas and Central American Natural Milds coffees are roasted in the apparatus described, zones 1 and 2 thereof being each four foot (121.92 cm) long and have a 14 inch (35.56 cm) diameter in one set of experiments. The holes in the roasting cylinders are each 3/32" (2.38 mm) and spaced 9/64" (3.57 mm) on staggered centers, providing a 40% open area in the roasting chambers 10 and 12, the screw in each instance for zones 1 and 2 having a flight pitch of 7" (17.78 cm). In each roasting condition specified, the coffee was fed at a rate of 200 pounds/hour [90.72 kg/hour] (green feed at a green moisture content of approximately 10%). Heated air circulated through the first and second zones at 1225 cu.ft. per minute (34.69 $m^3$ per minute) and at an air to bean ratio of 14:1 in each of zones 1 and 2.

## TABLE 1

### GREEN COFFEE VARIETY (Non-Decaffeinated)

| | Colombian | Brazilian | Ivory Coast Robustas | Central American Natural Milds |
|---|---|---|---|---|
| Internal Conditions (Δp)* Zone 1/Zone 2 | 0.75"/0.75" (1.91cm/1.91cm) | 0.75"/0.75" (1.91cm/1.91cm) | 0.75"/0.75" (1.91cm/1.91cm) | 0.75"/0.75" (1.91cm/1.91cm) |
| Cylinder Speed (RPM) Zone 1/Zone 2 | 10.0/15.4 | 13.5/22.2 | 11.5/21.8 | 12.0/22.2 |
| Temp (°F) Entering Zone 1/Zone 2 (Temp (°C) Entering Zone 1/Zone 2) | 600°/560° (315.6°/293.3°) | 600°/560° (315.6°/293.3°) | 600°/560° (315.6°/293.3°) | 600°/560° (315.6°/192.3°) |
| Static Bed Depth Zone 1/Zone 2 | 0.5"/0.7" (1.27cm/1.78cm) | 0.4"/0.5" (1.01cm/1.27cm) | 0.5"/0.5" (1.27cm/1.27cm) | 0.5"/0.5" (1.27cm/1.27cm) |
| Terminal Bed Depth At Discharge from Zone 2 | 4" (10.16cm) | 4" (10.16cm) | 4" (10.16cm) | 4" (10.16cm) |
| Roast Time Zone 1/Zone 2 | 40 sec/20 sec | 29 sec/18 sec | 35 sec/18 sec | 33 sec/18 sec |
| Air Quench Moisture After Zone 2/ final product moisture after a water and air quench at room temperature | 1.5%/4.5% | 1.5%/4.5% | 1.5%/4.5% | 1.5%/4.5% |
| Roasted Bean Density gm/cc | .310 | .301 | .336 | .295 |
| Roast Color Photovolts | 44 | 60 | 77 | 50 |

* The operating condition for each variety specify a delta p which represents the difference in pressure across (above and below) the bed measured as $P_2 - P_1$, Δp being a water pressure differential and being translatable to velocity and therefrom volume.

The coffee obtained by the processing conditions listed are each ground by passage through a NIPPON 201 FC Crackulator to produce an 11 ounce (311.8g) roast product. The higher yield, lower density coffees produced brewed products of excellent flavor, taste and aroma comparable to coffees brewed from the high density, lower yield roasted and ground coffees representing the traditional coffee standard.

## EXAMPLE 2

A larger plant scale-sized roaster which is capable of roasting 8,000 pounds of coffee per hour (3628.74 kg per hour) of the type described with reference to the accompanying drawings was also employed. The roaster employed for zones 1 and 2 respectively, each had a length of 15.3 feet (466.34 cm) and a diameter of 43 inches (109.2 cm), the other conditions being as indicated for the 8 ft. (243.84 cm) roaster of Example 1 except that the holes for the roasting cylinder had a 50% open area and the screw in each instance had a flight pitch of 20 inches (50.8 cm). The coffees were decaffeinated Colombians and Brazils in one experiment and decaffeinated Robustas in the other, the green coffee being fed in each instance at 8000 pounds per hour (3628.74 kg per hour) to the roaster. The air was passed through the first zone at 54,500 cu.ft. per minute (1543.27 $m^3$ per minute) with an air to bean ratio of 1. Air was circulated through the second zone at 52,600 cu.ft. per minute (1489.46 $m^3$ per minute) with an air to bean ratio of 15:1.

## T A B L E   2

### DECAFFEINATED COLUMBIAN (A), BRAZILIAN (J) AND ROBUSTA (M)

| | 50% A and 50% J | (M) |
|---|---|---|
| Internal Conditions ($\Delta p$) Zone 1/Zone 2 | 2.4"/2.2" (6.1 cm/6.1cm) | 2.4"/2.2" (6.1cm/6.1cm) |
| Cylinder Speed (RPM) Zone 1/Zone 2 | 14.1/14.1 | 14.1/14.1 |
| Temp (°F) Entering Zone 1/Zone 2 (Temp (°C) Entering Zone 1/Zone 2) | 620°/520° (326.7°/271.1°C) | 616°/540° (324.4°/282.2°) |
| Roast Time: Zone 1/Zone 2 | 30 sec/30 sec | 30 sec/30 sec |
| Final Product Moisture After Water and Air Quench | 4.9% | 4.9% |
| Roasted Bean Density gm/cc | .302 | .334 |
| Roast Color Photovolts | 34 | 40 |

\* The operating condition for each variety specify a delta which represents the difference in pressure across (above and below) the bed measured as $P_2 - P_1$, $\Delta p$ being a water pressure differential.

The blend of the first roast (constituting 50% A's and J's) and the second roast was formulated such that 30% of the first roast blend and 70% of the second blend (M) was prepared. The decaffeinated A and Js had a green density of 0.650 gms/cc and a moisture of 10.1% and the decaffeinated green Ms had a denisty of 0.707 gms/cc and a moisture of 11.2%. The roasted As and Js had a density of 0.302 gms/cc and the roasted Ms had a density of 0.334 gms/cc. The roast in each instance were popped in the second zone. The blended material was cracked (ground) through a commercial-scale Nippon mill (of the type set

14

forth in U.S. Patent No. 3,190,572 to Goto, issued June 22, 1965 for Coffee Granulating Apparatus which apparatus employs the Kasai method) No. GRN 6042. The gaps between the rolls of the Nippon mill were as follows from top to bottom of the mill: 1.16 mm., 0.66 mm., 0.18 mm. and 0.15 mm. The resulting ground density was 0.266 grams per cc in the can at the packing line. The ground coffee produces an 11 ounce blend that correlates quite favorably to that which would produce the Standard 90 cups of a given strength from 16 oz. (453.6g) of conventional 16 oz. (453.6g) roast.

The foregoing roasting conditions describe the roasting cylinder per se when it has achieved a steady state, the coffee being fed thereto at approximately 8,000 pounds per hour (approximately 3628.74 kg per hour). As indicated, percolates from the ground coffee produced had a flavor strength and character comparable to that of a conventional atmospheric roast. This is a remarkable finding, considering the reduction in quantity of coffee material required to provide a given beverage. Thus, an original recipe (16 oz. [453.6g]) requiring 51.2 gms of coffee with 1780 mls. of water can now be prepared from an 11 oz (311.8g) product using 35.2 gms of coffee in a drip coffee brewer.

The degree of expansion as a result of roasting in accord with this invention will be broadly such that the volume occupied by the roasted blend will have 65%-85% of the weight of a conventional atmospheric roast (say a Probat-batch roaster), commonly much less than 85% of said weight; lower the percent the greater the expansion and the greater the economy of use. In conjunction with greater expension by this process comes a greater flavor concentration per weight of coffee such that the extended recipe will contain a flavor comparable to a conventionally roasted coffee. Of course, there is a practical limit beyond which the beans will not expand and also deliver the required flavor and strength without significantly altering roast color and blend. At a percentage reduction greater than 35% of the conventional roast, these conditions will not apply.

It should be recognized that a density increase in the roasted and ground coffee will occur after grinding due to conveying of coffee to the packaging line; typically in the order of 5%. In the examples cited, a final package density of 0.264 gms/cc was originally 0.251 gms/cc at the grinding mill. Generally the grinding may be carried out in a manner which preserves the density reduction of the whole beans achieved by roasting. A grinder that may be employed for this purpose is a Nippon 201 FC Crackulator. As a result of grinding to an average particle size between 700-800 microns, the finished gorund density will range from 0.240-0.310 gms/per cc at the mill as measured by free flow density techniques well understood in the art.

**Claims**

1. A method for roasting a high volume of from 5,000 to 12,000 lbs per hour (2267.96 to 5443.10 kg per hour) of green coffee in a manner wherein the residence time of the coffee within the roaster is precisely controlled and is less than three minutes comprising the steps of:

   (a) positively feeding green coffee beans into the feed end of a first, longitudinally extending roasting chamber, said roasting chamber comprising a first rotating, cylindrical foraminous container which rotates within said roasting chamber and a first helical screw member attached to and rotatable within said container, said screw member having a diameter equal to that of the container and effective to convey the coffee beans through the roasting chamber at a precise rate upon rotation, the coffee beans being fed into the container at a rate such that the depth of the coffee bed entering is substantially less than 50% of the diameter of the container;

   (b) partially roasting the coffee beans within the first container for from 0.25 to 1.5 minutes while said beans are being subjected to a flow of heated gas which passes upwardly through the first foraminous container at a rate of at least 10 pounds of gas per pound of beans (at least 10 kg of gas per kg of beans) such that the hot gas causes an expansion of the advancing bean bed, the hot gas temperature being less than 630°F (332.2°C) and exceeding 500°F (260.0°C), whereby the beans are partly fluidized, partially dried and partially expanded but do not pop, the coffee beans increasing in their activity as they approach the terminal phase of the partial roast to a point whereat the beans are in a bubbling bed but do not exceed 400°F (204.4°C) temperature, the bean charge at no time being 100% fluidized, the depth of the partially expanded bed being at all times less than 50% of the diameter of the container;

   (c) passing the partially roasted beans from the discharge end of the first roasting chamber into the feed end of a second longitudinally extending roasting chamber, the first and second roasting chambers being related one to another in a manner which prevent substantially escape of heated gas and beans from the roasting chambers;

(d) conveying said beans through said second roasting chamber by means of a second rotating, cylindrical foraminous container and a second helical screw member like the first, the coffee beans residing in said second roasting chamber for from 0.25 to 2.0 minutes while said beans are being subjected to a flow of heated gas which passes upwardly through the second foraminous container, said gas having a temperature equal to or less than that of the gas entering the first roasting chamber, said beans being heated to a temperature exceeding 360°F (182.2°C) but less than 480°F (248.9°C) and being more vigorously bubbled in the second roasting chamber than in the first roasting chamber along the length thereof by gas at a mass flow rate of at least about 10 pounds of gas per pound of beans (at least about 10 kg of gas per kg of beans) and at least until the beans pop and have the requisite flavor and color developed therein, the bean charge at no time being 100% fluidized and the temperature of the beans entering the second roaster being no less than 15°F (8.3°C) below the temperature thereof leaving the first roaster;

(e) passing the roasted coffee beans from the discharge end of the second roasting chamber into a quenching zone; and

(f) quenching the roasted coffee in said zone with water and/or air to produce a roasted coffee with a whole bean density of from 0.28 to 0.34 g/cc.

2. A method according to claim 1, wherein the total roasting time is less than 2.0 minutes, and the roasting time within the second roasting chamber is less than 1.5 minutes.

3. A method according to claim 1 or claim 2, wherein the temperature of gas entering the second roasting chamber is no more than 150°F (83.3°C) less than that entering the first roasting chamber.

4. A method according to any one of claims 1 to 3, wherein the coffee is a single variety.

5. A method according to any one of claims 1 to 4, wherein the coffee is principally a Robusta and the gas temperature in said second roasting chamber is 25° to 125°F (13.9° to 69.4°C) less than that in the first chamber.

6. A method according to any one of claims 1 to 4, wherein the coffee is principally a Santos and the gas temperature in said second roasting chamber is 25° to 125°F (13.9° to 69.4°C) less than that in the first chamber.

7. A method according to any one of claims 1 to 4, wherein the coffee is principally Milds and the gas temperature in said second roasting chamber is 0° to 75°F (0° to 41.7°C) less than that in the first chamber.

8. A method according to any one of claims 1 to 7, wherein two or more coffee varieties to be roasted are blended after roasting and wherein the individual coffee varieties are separately roasted to their optimal colors, said varieties being Robusta, Santos, Milds or blends thereof.

9. A method according to any one of claim 1 to 3, wherein the coffee is a blend of coffee varieties.

10. A method according to claim 9, wherein the coffee comprises a blend of non-decaffeinated Robustas, Santos and Milds, the Robustas being roasted to a color of 70-90, Milds 40-60, and Santos to 50-70 photovolts.

11. A method according to any one of claims 1 to 3, wherein the coffee comprises a decaffeinated coffee or blend of decaffeinated coffees roasted to a colour of 30 to 60 photovolts.

12. A method according to any one of claims 1 to 11, wherein the temperature of gas in the first zone exceeds 525°F (273.9°C).

13. A method according to claim 12, wherein the temperature of gas in the second zone is 25°F or more (13.9°C or more) less than that of the first zone and said beans are principally Robusta, Santos or a blend thereof.

**14.** A method according to claim 12, wherein the temperature of gas in the second zone is 0° to 75°F (0° to 41.7°C) less than that of the first zone and said beans are principally Milds.

**15.** A method according to any one of claims 1 to 14, wherein the coffee in the first and second chambers is subjected to a combined total mass flow rate of 20 to 60 pounds of gas per pound of beans (20 to 60 kg of gas per kg of beans).

**16.** A method according to any one of claims 1 to 15, wherein the roasted coffee is first charged to a water quench and thereafter is promptly fed to an air quench.

**17.** A method according to any one of claims 1 to 16, wherein roasted coffee particulate matter including roasted chaff is collected at the discharge end of the second roasting chamber and is recombined with the roasted coffee beans.

**18.** A method according to any one of claims 1 to 17, wherein the total roasting time from point of entry to the first roasting chamber to the point of discharge from the second roasting chamber is less than 1.5 minutes and wherein the coffee is fed therealong at a constant rate as determined by the pitches and the rotational speed of the first and second zones' screws.

**19.** A method according to any one of claims 1 to 18, wherein the beans in the first roasting chamber reach a temperature exceeding 300°F (148.9°C) but less than 400°F (204.4°C), and wherein the beans entering the second rotating chamber are further exposed to gas at a temperature equal to or less than in the first roaster whereby controlled pyrolysis occurs in the second roasting chamber generating coffee flavor, color and bean expansion.

**20.** A method according to any one of claims 1 to 19, wherein the gas temperature in the first roasting chamber exceeds 500°F (260.0°C) and the gas temperature in the second roasting chamber is 0°-125°F (0°-69.4°C) below that in the first roasting chamber.

**21.** A method according to any one of claims 1 to 20, wherein the beans are heated in the second roasting chamber to a temperature that is between 365°F (185.0°C) and 450°F (232.2°C).

**22.** A method according to any one of claims 1 to 21, wherein the beans are elevated in the second roasting chamber to a temperature not exceeding substantially the glass transition temperature and maintained thereat for less than 30 seconds.

**23.** A method according to any one of claims 1 to 22, wherein the gas temperatures in the first roasting chamber are from 500° to 630°F (260.0° to 332.2°C) and in the second roasting chamber are from 460° to 570°F (237.8° to 298.9°C).

**24.** A method according to any one of claims 1 to 23, wherein the gas temperature in the first roasting chamber is 560° - 610°F (293.3° - 321.1°C).

**25.** A method according to any one of claims 1 to 24, wherein at least 20% of the bed fluidizes in the first roasting chamber and wherein at least 50% of the bed fluidizes in the second roasting chamber.

**26.** A method according to any one of claims 1 to 25, wherein the beans are introduced to the first roasting chamber at a rate such that the charge of beans is less than five inches (12.7 cm) in height when they enter in a quiescent state.

**27.** A method according to any one of claims 1 to 26, wherein the coffee exits the first roaster at 0.5-4% moisture.

**28.** Apparatus for continuously roasting coffee in a manner wherein the residence time is precisely controlled and is brief comprising:
(a) means positively feeding green coffee beans into the feed end of a first, horizontal, longitudinally extended roasting chamber, said roasting chamber comprising a first rotatable, cylindrical foraminous container and a first helical screw member attached to and rotatable within said container, said screw member having a diameter equal to the container and effective to convey coffee through the chamber at a precise rate;

(b) means for roasting the coffee within the first container including gas heating means adapted to pass heating gas upwardly through the first foraminous container at a rate of at least 10 pounds of gas per pound of coffee beans (at least 10 kg of gas per kg of coffee beans) such that the hot gas causes an expansion of the advancing bean bed, the gas heating means being operative to heat the coffee at 500°-630°F (260.0° to 332.2°C) to partially fluidize, partially dry and partially expand the coffee beans without popping them and produce a bubbling bed therein not exceeding 400°F (204.4°C) bean temperature;

(c) means for passing the partially roasted beans from the discharge end of the first roasting chamber to the feed end of a second roasting chamber, said passing means preventing substantial loss of heated gas and beans from the second roasting chamber;

(d) a second roasting chamber like the first roasting chamber comprising a second rotating cylindrical foraminous container and a second helical screw member like the first, said second roasting chamber including second gas heating means adapted to pass heating gas upwardly through the second foraminous container at a rate of at least 10 pounds of gas per pound of coffee beans (at least 10 kg of gas per kg of coffee beans) such that the hot gas causes a continued expansion of the advancing bean bed and such that the coffee beans have the requisite flavor and color developed therein;

(e) means for passing the roasted coffee from the discharge end of the second roaster to a coffee quencher; and

(f) means for quenching the roasted coffee by water and/or air.

**Patentansprüche**

1. Verfahren zum Rösten eines großen Volumens von 5.000 bis 12.000 Pounds pro Stunde (2.267,96 bis 5.443,10 kg pro Stunde) von grünem Kaffee auf eine Weise, bei der die Verweilzeit des Kaffees innerhalb des Rösters genau geregelt ist und Weniger als drei Minuten beträgt, wobei das Verfahren die Schritte umfaßt, daß man

(a) grüne Kaffeebohnen in das Beschickungsende einer ersten, sich in Längsrichtung erstreckenden Röstkammer zwangschlüssig einführt, wobei die Röstkammer einen ersten rotierenden, zylindrischen Foraminiferenkalk-Behälter aufweist, der innerhalb der Röstkammer rotiert und ein erstes schraubenartiges Schraubenteil, welches im Behälter angebracht und darin drehbar ist, wobei das Schraubenteil einen Durchmesser aufweist, der gleich dem des Behälters ist und das Fördern der Kaffeebohnen durch die Röstkammer durch Rotation mit einer bestimmten Mengengeschwindigkeit bewirkt, wobei die Kaffeebohnen in den Behälter mit einer Mengengeschwindigkeit eingespeist werden, daß die Tiefe des eintretenden Kaffeebetts im wesentlichen weniger als 50 % des Behälterdurchmessers beträgt;

(b) die Kaffeebohnen im ersten Behälter 0,25 bis 1,5 Minuten lang teilweise röstet, wobei die Bohnen einem Fluß eines beheizten Gases ausgesetzt werden, welches aufwärts durch den ersten Foraminiferenkalk-Behälter mit einer Mengengeschwindigkeit von mindestens 10 Pounds Gas pro Pound Bohnen (mindestens 10 kg Gas pro kg Bohnen) geleitet wird, so daß das heiße Gas ein Expandieren des sich vorwärts bewegenden Bohnenbettes verursacht, wobei die Temperatur des heißen Gases weniger als 630 °F (332,2 °C) beträgt und 500 °F (260,0 °C) übersteigt, wodurch die Bohnen zum Teil fluidisiert, teilweise getrocknet und ohne zu platzen teilweise expandiert werden, wobei die Kaffeebohnen in ihrer Aktivität beim Annähern an die Endphase des teilweisen Röstens bis zu einem Punkt zunehmen, bei dem sich die Bohnen in einem Blasenbett befinden, jedoch die Temperatur von 400 °F (204,4 °C) nicht übersteigen, wobei die Bohnenbeschickung zu keiner Zeit 100-prozentig fluidisiert ist, wobei die Tiefe des teilweise expandierten Betts zu jeder Zeit weniger als 50 % des Behälterdurchmessers beträgt;

(c) die teilweise gerösteten Bohnen vom Austragsende der ersten Röstkammer zum Beschickungsende einer zweiten sich in Längsrichtung erstreckenden Röstkammer leitet, wobei die erste und die zweite Röstkammer zueinander auf eine Weise in Beziehung stehen, daß ein Entweichen von erhitztem Gas und Bohnen aus den Röstkammern im wesentlichen verhindert wird;

(d) die Bohnen durch die zweite Röstkammer mit Hilfe eines zweiten rotierenden, zylindrischen Foraminiferenkalk-Behälters und eines zweiten schraubenartigen Schraubenteils wie die ersten fördert, wobei die Kaffeebohnen in der zweiten Röstkammer 0,25 bis 2,0 Minuten lang verbleiben, während die Bohnen einem Fluß eines beheizten Gases ausgesetzt werden, welches aufwärts durch den zweiten Foraminiferenkalk-Behälter geleitet wird, wobei das Gas eine Temperatur hat, die gleich oder kleiner ist als diejenige des in die erste Röstkammer eintretenden Gases, wobei die Bohnen auf eine Temperatur erwärmt werden, die 360 °F (182,2 °C) übersteigt, jedoch weniger als 480 °F (248,9 °C) beträgt, und in der zweiten Röstkammer entlang dessen Weg mit einem Gas mit einem Massenfluß von mindestens etwa 10 Pounds Gas pro Pound Bohnen (mindestens etwa 10 kg Gas pro kg Bohnen) heftiger geblasen werden als in der ersten Röstkammer, mindestens bis die Bohnen platzen und sich in ihnen der geforderte Geschmack und die geforderte Farbe entwickelt haben, wobei die Bohnenbeschickung zu keiner Zeit 100-prozentig fluidisiert ist und die Temperatur der in den zweiten Röster eintretenden Bohnen nicht weniger als 15 °F (8,3 °C) unterhalb der Temperatur liegt, mit der sie den ersten Röster verlassen;

(e) die gerösteten Kaffeebohnen durch das Austragsende der zweiten Röstkammer in eine Abschreckzone leitet, und

(f) zum Erzeugen von geröstetem Kaffee mit einer Ganzbohnendichte von 0,28 bis 0,34 g/cc den gerösteten Kaffee in der Zone mit Wasser und/oder Luft abschreckt.

2. Verfahren nach Anspruch 1, wobei die Gesamtröstzeit weniger als 2,0 Minuten beträgt und die Röstzeit in der zweiten Röstkammer weniger als 1,5 Minuten beträgt.

3. Verfahren nach Anspruch 1 oder 2, wobei die Temperatur des in die zweite Röstkammer eintretenden Gases nicht mehr als 150 °F (83,3 °C) unterhalb desjenigen liegt, mit welches in die erste Röstkammer eintritt.

4. Verfahren nach einem der Ansprüche 1 bis 3, wobei der Kaffee eine Einzelsorte ist.

5. Verfahren nach einem der Ansprüche 1 bis 4, wobei der Kaffee hauptsächlich ein Robusta ist und wobei die Gastemperatur in der zweiten Röstkammer 25 bis 125 °F (13,9 bis 69,4 °C) weniger beträgt als die in der ersten Kammer.

6. Verfahren nach einem der Ansprüche 1 bis 4, wobei der Kaffee hauptsächlich ein Santos ist und wobei die Gastemperatur in der zweiten Röstkammer 25 bis 125 °F (13,9 bis 69,4 °C) weniger beträgt als die in der ersten Kammer.

7. Verfahren nach einem der Ansprüche 1 bis 4, wobei der Kaffee hauptsächlich Milds ist und wobei die Gastemperatur in der zweiten Röstkammer 0 bis 75 °F (0 bis 41,7 °C) weniger beträgt als die in der ersten Kammer.

8. Verfahren nach einem der Ansprüche 1 bis 7, wobei zwei oder mehrere zu röstende Kaffeesorten nach dem Rösten gemischt werden und wobei die einzelnen Kaffeesorten getrennt auf optimale Farbe geröstet werden, wobei die Sorten Robusta, Santos, Milds oder Gemische davon sind.

9. Verfahren nach einem der Ansprüche 1 bis 3, wobei der Kaffee ein Gemisch aus Kaffeesorten ist.

10. Verfahren nach Anspruch 9, wobei der Kaffee ein Gemisch aus nicht-entkoffeinisierten Robustas, Santos und Milds ist, wobei die Robustas auf eine Farbe von 70 bis 90, die Milds von 40 bis 60 und die Santos von 50 bis 70 Photovolt geröstet werden.

11. Verfahren nach einem der Ansprüche 1 bis 3, wobei der Kaffee einen entkoffeinisierten Kaffee oder ein Gemisch aus entkoffeinisierten Kaffees umfaßt, die auf eine Farbe von 30 bis 60 Photovolt geröstet sind.

12. Verfahren nach einem der Ansprüche 1 bis 11, wobei die Temperatur des Gases in der ersten Zone 525 °F (273,9 °C) übersteigt.

13. Verfahren nach Anspruch 12, wobei die Temperatur des Gases in der zweiten Zone 25 °F oder mehr (13,9 °C oder mehr) niedriger ist als die der ersten Zone und wobei die Bohnen hauptsächlich Robusta, Santos oder ein Gemisch davon sind.

14. Verfahren nach Anspruch 12, wobei die Temperatur des Gases in der zweiten Zone 0 bis 75 °F (0 bis 41,7 °C) weniger beträgt als die der ersten Zone und wobei die Bohnen hauptsächlich Milds sind.

15. Verfahren nach einem der Ansprüche 1 bis 14, wobei der Kaffee in der ersten und zweiten Kammer einem kombinierten Gesamt-Massenfluß von 20 bis 60 Pounds Gas pro Pound Bohnen (20 bis 60 kg Gas pro kg Bohnen) unterworfen wird.

16. Verfahren nach einem der Ansprüche 1 bis 15, wobei der geröstete Kaffee erst einem Abschrecken mit Wasser und dann sofort einem Abschrecken mit Luft zugeführt wird.

17. Verfahren nach einem der Ansprüche 1 bis 16, wobei teilchenförmige Stoffe des gerösteten Kaffees unter Einschluß von gerösteter Spreu am Austragsende der zweiten Röstkammer gesammelt und mit den gerösteten Kaffeebohnen vereinigt werden.

18. Verfahren nach einem der Ansprüche 1 bis 17, wobei die Gesamtröstzeit vom Punkt des Eintritts in die erste Röstkammer bis zum Punkt des Austrags aus der zweiten Röstkammer weniger als 1,5 Minuten beträgt und wobei der Kaffee dort entlang mit einer konstanten Mengengeschwindigkeit gefördert wird, die von der Steigung und von der Rotationsgeschwindigkeit der Schrauben der ersten und zweiten Zone bestimmt ist.

19. Verfahren nach einem der Ansprüche 1 bis 18, wobei die Bohnen in der ersten Röstkammer eine Temperatur erreichen, die 300 °F (148,9 °C) übersteigt, jedoch weniger als 400 °F (204,4 °C) beträgt und wobei die in die zweite Röstkammer eintretenden Bohnen weiter einem Gas mit einer Temperatur ausgesetzt werden, die gleich wie oder niedriger ist als die im ersten Röster, wodurch in der zweiten Röstkammer kontrollierte Pyrolyse erfolgt, durch die Kaffeegeschmack, -farbe und -bohnenexpansion erzeugt werden.

20. Verfahren nach einem der Ansprüche 1 bis 19, wobei die Gastemperatur in der ersten Röstkammer 500 °F (260,0 °C) übersteigt und die Gastemperatur in der zweiten Röstkammer 0 bis 125 °F (0 bis 69,4 °C) unterhalb derjenigen der ersten Röstkammer liegt.

21. Verfahren nach einem der Ansprüche 1 bis 20, wobei die Bohnen in der zweiten Röstkammer auf eine Temperatur aufgeheizt werden, die zwischen 365 und 450 °F (185,0 und 232,2 °C) liegt.

22. Verfahren nach einem der Ansprüche 1 bis 21, wobei die Bohnen in der zweiten Röstkammer auf eine Temperatur angehoben werden, die die Glasübergangstemperatur nicht wesentlich übersteigt und dort weniger als 30 Sekunden lang gehalten werden.

23. Verfahren nach einem der Ansprüche 1 bis 22, wobei die Gastemperaturen in der zweiten Röstkammer 500 bis 630 °F (260 bis 332,2 °C) und in der zweiten Röstkammer 460 bis 570 °F (237,8 bis 298,9 °C) betragen.

24. Verfahren nach einem der Ansprüche 1 bis 23, wobei die Gastemperatur in der ersten Röstkammer 560 bis 610 °F (293,3 bis 321,1 °C) beträgt.

25. Verfahren nach einem der Ansprüche 1 bis 24, wobei in der ersten Röstkammer mindestens 20 % des Betts fluidisiert sind und wobei in der zweiten Röstkammer mindestens 50 % des Betts fluidisiert sind.

26. Verfahren nach einem der Ansprüche 1 bis 25, wobei die Bohnen in die erste Röstkammer mit einer Mengengeschwindigkeit eingeführt werden, daß die Bohnenbeschickung eine Höhe von weniger als 5 inches (12,7 cm) aufweist, wenn sie in unbewegtem Zustand eintreten.

27. Verfahren nach einem der Ansprüche 1 bis 26, wobei der Kaffee aus dem ersten Röster mit 0,5 bis 4 % Feuchtigkeit austritt.

28. Vorrichtung zum kontinuierlichen Rösten von Kaffee, bei der die Verweilzeit des Kaffees innerhalb des Rösters genau geregelt und kurz ist, umfassend:

20

(a) eine Einrichtung zum zwangsschlüssigen Einführen von grünen Kaffeebohnen in das Beschikkungsende einer ersten, horizontalen, sich in Längsrichtung erstreckenden Röstkammer, wobei die Röstkammer einen ersten rotierenden, zylindrischen Foraminiferenkalk-Behälter aufweist und ein erstes schraubenartiges Schraubenteil, welches im Behälter angebracht und darin drehbar ist, wobei das Schraubenteil einen Durchmesser aufweist, der gleich dem des Behälters ist und das Fördern der Kaffeebohnen durch die Kammer mit einer bestimmten Mengengeschwindigkeit bewirkt;

(b) eine Einrichtung zum Rösten des Kaffees im ersten Behälter unter Einschluß einer Gasheizeinrichtung, die dazu eingerichtet ist, Heizgas aufwärts durch den ersten Foraminiferenkalk-Behälter mit einer Mengengeschwindigkeit von mindestens 10 Pounds Gas pro Pound Kaffeebohnen (mindestens 10 kg Gas pro kg Kaffeebohnen) zu leiten, so daß das heiße Gas ein Expandieren des sich vorwärts bewegenden Bohnenbettes verursacht, wobei die Gasheizeinrichtung ein Aufheizen des Kaffees auf 500 bis 630 ° F (260,0 bis 332,2 ° C) verursacht, um die Kaffeebohnen zum Teil zu fluidisieren, teilweise zu trocknen und ohne zu platzen teilweise zu expandieren und darin ein Blasenbett zu erzeugen, dessen Bohnentemperatur 400 ° F (204,4 ° C) nicht übersteigt;

(c) eine Einrichtung zum Leiten der teilweise gerösteten Bohnen vom Austragsende der ersten Röstkammer zum Beschickungsende einer zweiten Röstkammer, wobei die Einrichtung zum Leiten Verlust von erhitztem Gas und Bohnen aus der zweiten Röstkammer im wesentlichen verhindert;

(d) eine zweite Röstkammer wie die erste Röstkammer, aufweisend einen zweiten rotierenden zylindrischen Foraminiferenkalk-Behälter und ein zweites schraubenartiges Schraubenteil wie die ersten, wobei die zweite Röstkammer eine zweite Gasheizeinrichtung einschließt, die dazu eingerichtet ist, Heizgas aufwärts durch den ersten Foraminiferenkalk-Behälter mit einer Mengengeschwindigkeit von mindestens 10 Pounds Gas pro Pound Kaffeebohnen (mindestens 10 kg Gas pro kg Kaffeebohnen) zu leiten, so daß das heiße Gas ein fortlaufendes Expandieren des sich vorwärts bewegenden Bohnenbettes verursacht und daß die Kaffeebohnen darin den geforderten Geschmack und die geforderte Farbe entwickeln;

(e) eine Einrichtung zum Leiten des gerösteten Kaffees vom Austragsende des zweiten Rösters zu einem Kaffee-Abschrecker; und

(f) eine Einrichtung zum Abschrecken des gerösteten Kaffees durch Wasser und/oder Luft.

## Revendications

1. Procédé de torréfaction d'un volume élevé de café vert compris entre 2 267,96 et 5 443,10 kg/h (5 000 à 12 000 livres par heure), d'une manière telle que le temps de séjour du café dans le torréfacteur est réglé avec précision et est inférieur à 3 min, comprenant les étapes suivantes :

(a) l'avance positive de grains de café vert à l'extrémité d'alimentation d'une première chambre longitudinale de torréfaction, cette chambre ayant un premier récipient cylindrique perforé rotatif qui tourne dans la chambre de torréfaction et une première vis hélicoïdale fixée au récipient et pouvant tourner dans le récipient, la vis ayant un diamètre égal à celui du récipient et assurant un transport efficace des grains de café dans la chambre de torréfaction avec un débit précis lors de la rotation, les grains de café étant transmis dans le récipient avec une vitesse telle que la hauteur du lit de café qui pénètre est pratiquement inférieure à 50 % du diamètre du récipient,

(b) la torréfaction partielle des grains de café dans le premier récipient pendant 0,25 à 1,5 min, alors que les grains sont soumis à un courant de gaz chauds qui remonte à travers le premier récipient perforé avec un débit d'au moins 10 kg de gaz par kilogramme de grains (10 livres de gaz par livre de grains) de manière que les gaz chauds provoquent une expansion du lit de grains qui avancent, la température des gaz chauds étant inférieure à 332,2 ° C (630 ° F) et dépassant 260,0 ° C (500 ° F), si bien que les grains sont partiellement fluidisés, partiellement séchés et partiellement expansés mais n'éclatent pas, les grains de café ayant une activité qui augmente lorsqu'ils se rapprochent de la phase terminale de la torréfaction partielle à un point tel que les grains se trouvent dans un lit bouillonnant mais ne dépasse une température de 204,4 ° C (400 ° F), la charge de grains n'étant jamais fluidisée à 100 %, la profondeur du lit partiellement expansé étant toujours inférieure à 50 % du diamètre du récipient,

(c) le passage des grains partiellement torréfiés de l'extrémité d'évacuation de la première chambre de torréfaction à l'extrémité d'alimentation d'une seconde chambre longitudinale de torréfaction, la première et la seconde chambre de torréfaction étant reliées l'une à l'autre de manière que les gaz chauds et les grains ne puissent pratiquement pas s'échapper des chambres de torréfaction,

(d) le transport des grains dans la seconde chambre de torréfaction à l'aide d'un second récipient perforé cylindrique rotatif et d'une seconde vis hélicoïdale analogues aux premiers, les grains de café résidant dans la seconde chambre de torréfaction pendant 0,25 à 2,0 min alors que les grains sont soumis à un courant de gaz chauds qui remonte à travers le second récipient perforé, le gaz ayant une température inférieure ou égale à celle des gaz entrant dans la première chambre de torréfaction, les grains étant chauffés à une température supérieure à 182,2 °C (360 °F) mais inférieure à 248,9 °C (480 °F) et subissant un bouillonnant plus vigoureux dans la seconde chambre de torréfaction que dans la première chambre de torréfaction le long de celle-ci sous l'action des gaz ayant un débit massique d'au moins 10 kg de gaz environ par kilogramme de grains (environ 10 livres par livre) et au moins jusqu'à ce que les grains éclatent et présentent le développement nécessaire de l'arôme et de la couleur, la charge de grains n'étant jamais fluidisée à 100 % et la température des grains entrant dans le second torréfacteur n'étant pas inférieure de plus de 8,3 °C (15 °F) à la température à la sortie du premier torréfacteur,

(e) le passage des grains torréfiés de café de l'extrémité d'évacuation de la seconde chambre de torréfaction à une zone de refroidissement, et

(f) le refroidissement du café torréfié dans ladite zone à l'aide d'eau et/ou d'air pour la formation d'un café torréfié ayant une masse volumique de grains entiers comprise entre 0,28 et 0,34 g/cm$^3$.

2. Procédé selon la revendication 1, dans lequel le temps total de torréfaction est inférieur à 2,0 min, et le temps de torréfaction dans la seconde chambre est inférieur à 1,5 min.

3. Procédé selon la revendication 1 ou 2, dans lequel la température des gaz entrant dans la seconde chambre n'est pas inférieure de plus de 83,3 °C (150 °F) à celle des gaz entrant dans la première chambre de torréfaction.

4. Procédé selon l'une des revendications 1 à 3, dans lequel le café est formé d'une seule variété.

5. Procédé selon l'une quelconque des revendications 1 à 4, dans lequel le café est essentiellement un café Robusta et la température des gaz dans la seconde chambre est inférieure de 13,9 à 69,4 °C (25 à 125 °F) à celle de la première chambre.

6. Procédé selon l'une quelconque des revendications 1 à 4, dans lequel le café est essentiellement du café Santos et la température des gaz dans la seconde chambre est inférieure de 13,9 à 69,4 °C (25 à 125 °F) à celle de la première chambre.

7. Procédé selon l'une quelconque des revendications 1 à 4, dans lequel le café est essentiellement du type Milds, et la température des gaz dans la seconde chambre est inférieure de 0 à 41,7 °C (0 à 75 °F) à celle de la première chambre.

8. Procédé selon l'une quelconque des revendications 1 à 7, dans lequel deux variétés de cafés au moins à torréfier sont mélangées après torréfaction, et les variétés individuelles de cafés sont torréfiées séparément aux couleurs optimales, les variétés étant les variétés Robusta, Santos, Milds ou un de leurs mélanges.

9. Procédé selon l'une quelconque des revendications 1 à 3, dans lequel le café est un mélange de variétés.

10. Procédé selon la revendication 9, dans lequel le café est un mélange de variétés Robusta, Santos et Milds non décaféiné, les cafés Robusta étant torréfiés à une couleur de 70 à 90, les cafés Milds à une couleur de 40 à 60 et les cafés Santos à une couleur de 50 à 70 photovolts.

11. Procédé selon l'une quelconque des revendications 1 à 3, dans lequel le café est un café décaféiné ou un mélange de cafés décaféinés torréfiés à une couleur de 30 à 60 photovolts.

12. Procédé selon l'une quelconque des revendications 1 à 11, dans lequel la température des gaz dans la première zone dépasse 273,9 °C (525 °F).

13. Procédé selon la revendication 12, dans lequel la température des gaz dans la seconde zone est inférieure de 13,9 °C ou plus (25 °F ou plus) à celle de la première zone et les grains sont essentiellement des variétés Robusta, Santos ou un de leurs mélanges.

**14.** Procédé selon la revendication 12, dans lequel la température des gaz dans la seconde zone est inférieure de 0 à 41,7 °C (0 à 75 °F) à celle de la première zone et les grains sont essentiellement de la variété Milds.

**15.** Procédé selon l'une quelconque des revendications 1 à 14, dans lequel le café de la première et de la seconde chambre est soumis à un débit massique total combiné de 20 à 60 kg de gaz par kilogramme de grains (20 à 60 livres par livre).

**16.** Procédé selon l'une quelconque des revendications 1 à 15, dans lequel le café torréfié est d'abord chargé pour subir un refroidissement par eau puis est rapidement transmis pour subir un refroidissement par air.

**17.** Procédé selon l'une quelconque des revendications 1 à 16, dans lequel la matière particulaire du café torréfié contenant la balle torréfiée est collectée à l'extrémité de sortie de la seconde chambre de torréfaction et est recombinée aux grains de café torréfiés.

**18.** Procédé selon l'une quelconque des revendications 1 à 17, dans lequel le temps total de torréfaction de l'entrée dans la première chambre au point d'évacuation de la seconde chambre est inférieur à 1,5 min, et dans lequel le café est transmis avec un débit constant déterminé par les pas et les vitesses de rotation des vis de la première et de la seconde zone.

**19.** Procédé selon l'une quelconque des revendications 1 à 18, dans lequel les grains de la première chambre atteignent une température supérieure à 148,9 °C (300 °F) mais inférieure à 204,4 °C (400 °F), et dans lequel les grains entrant dans la seconde chambre sont en outre exposés à des gaz à une température inférieure ou égale à celle du premier torréfacteur, si bien qu'une pyrolyse contrôlée se produit dans la seconde chambre et donne l'arôme, la couleur et l'expansion des grains du café.

**20.** Procédé selon l'une quelconque des revendications 1 à 19, dans lequel la température des gaz dans la première chambre dépasse 260,0 °C (500 °F) et la température des gaz dans la seconde chambre est inférieure de 0 à 69,4 °C (0 à 125 °F) à celle de première chambre.

**21.** Procédé selon l'une quelconque des revendications 1 à 20, dans lequel les grains sont chauffés dans la seconde chambre à une température comprise entre 185,0 et 232,2 °C (365 et 450 °F).

**22.** Procédé selon l'une quelconque des revendications 1 à 21, dans lequel les grains sont élevés dans la seconde chambre à une température qui ne dépasse pratiquement pas la température de transition vitreuse et sont maintenus à cette température pendant moins de 30 s.

**23.** Procédé selon l'une quelconque des revendications 1 à 22, dans lequel les températures des gaz dans la première chambre sont comprises entre 260,0 et 332,2 °C (500 et 630 °F) et, dans la seconde chambre, entre 237,8 et 298,9 °C (460 et 570 °F).

**24.** Procédé selon l'une quelconque des revendications 1 à 23, dans lequel la température des gaz de la première chambre est comprise entre 293,3 et 321,1 °C (560 et 610 °F).

**25.** Procédé selon l'une quelconque des revendications 1 à 24, dans lequel 20 % au moins du lit sont fluidisés dans la première chambre de torréfaction et 50 % au moins du lit sont fluidisés dans la seconde chambre de torréfaction.

**26.** Procédé selon l'une quelconque des revendications 1 à 25, dans lequel les grains sont introduits dans la première chambre de torréfaction avec un débit tel que la charge de grains a une hauteur inférieure à 12,7 cm (5 pouces) lorsqu'ils pénètrent, à l'état calme.

**27.** Procédé selon l'une quelconque des revendications 1 à 26, dans lequel le café sort du premier torréfacteur avec une humidité comprise entre 0,5 et 4 %.

**28.** Appareil de torréfaction continue de café de manière que son temps de séjour soit réglé avec précision et soit bref, comprenant :

(a) un dispositif d'avance positive des grains de café vert à l'extrémité d'alimentation d'une première chambre longitudinale horizontale de torréfaction, cette chambre comportant un premier récipient cylindrique rotatif perforé et une première vis hélicoïdale fixée au récipient et tournant avec lui, la vis ayant un diamètre égal à celui du récipient et transportant efficacement le café dans la chambre avec un débit précis,

(b) un dispositif de torréfaction du café dans le premier récipient, comprenant un dispositif de chauffage de gaz destiné à transmettre un gaz de chauffage qui remonte à travers le premier récipient perforé avec un débit d'au moins 10 kg de gaz par kilogramme de grains (10 livres par livre) de manière que les gaz chauds provoquent une expansion du lit des grains qui avancent, le dispositif de chauffage et le gaz provoquant le chauffage du café entre 260,0 et 332,2 °C (500 et 630 °F) afin que les grains de café subissent une fluidisation partielle, un séchage partiel et une expansion partielle sans éclatement et forment un lit bouillonnant dont la température ne dépasse pas 204,4 °C (400 °F),

(c) un dispositif destiné à faire passer les grains partiellement torréfiés de l'extrémité d'évacuation de la première chambre de torréfaction à l'extrémité d'alimentation de la seconde chambre de torréfaction, ce dispositif empêchant des pertes importantes de gaz chauds et de grains provenant de la chambre de torréfaction,

(d) une seconde chambre de torréfaction analogue à la première et comprenant un second récipient cylindrique rotatif perforé et une seconde vis hélicoïdale analogues aux premiers, la seconde chambre ayant un second dispositif de chauffage de gaz destiné à transmettre des gaz de chauffage vers le haut à travers le second récipient perforé avec un débit d'au moins 10 kg de gaz par kilogramme de grains de café (10 livres par livre) afin que le gaz provoque une expansion continue du lit de grains qui avancent et de manière que les grains de café présentent le développement nécessaire de l'arôme et de la couleur,

(e) un dispositif destiné à faire passer les grains torréfiés de l'extrémité d'évacuation du second torréfacteur à un organe de refroidissement du café, et

(f) un dispositif de refroidissement du café torréfié par de l'eau et/ou de l'air.

**FIG.1**

**FIG.2**

# FIG.3

# FIG.4

EP 0 325 822 B1

FIG.5

# FIG.6

# FIG.7

FIG.8

94
P₂
93
68-70
76
72
74
92
P₁
90
97
86
80
99
88
95

FIG.10

208
204
206
202
200

# FIG.9

FIG.11

FIG.12